# DEMANDE DE BREVET EUROPEEN

(11) **EP 1 053 893 A1**
(43) Date de publication de la demande: **22.11.2000**
(21) Numéro de dépôt: 00410052.5
(22) Date de dépôt: 17.05.2000
(51) Int. Cl.: B60B 7/20, G09F 21/04

(54) **Dispositif enjoliveur à écran publicitaire monté sur une jante d'une roue de véhicle**

(30) Priorité: 18.05.1999 FR 9906428
(71) Demandeur: Abloc, 73400 Ugine (FR)
(72) Inventeur: Kupfer, Marc Philippe Marcel, 38470 Chamtesse (FR); Guyon, Thiery, 73200 Mercury (FR)
(74) Mandataire: Hecké, Gérard

(57) **Abrégé**

Un dispositif enjoliveur comprend un écran 12 publicitaire adaptable à une jante 24 d'une roue de véhicule par des moyens de fixation démontables. Il comporte :
- un organe de support (18) rotatif fixé à la jante (24) par des moyens de centrage coopérant avec les vis (27) de fixation de la jante (24) sur le moyeu d'entraînement de la roue,
- un dispositif à roulement (36) pourvu d'une rainure de guidage (48) dans laquelle s'engage en position active un élément d'accouplement (34) de l'organe de support (18) rotatif,
- une cage interne (40) équipée d'une protubérance (46) apte à délimiter axialement ladite rainure de guidage (48), et une surface d'appui (50) pour le moyen d'assemblage (16) de la liaison mécanique.

## Description

### Domaine technique de l'invention

L'invention est relative à un dispositif enjoliveur comprenant un écran publicitaire adaptable à une jante d'une roue de véhicule par des moyens de fixation démontables, et comportant :
- un organe de support rotatif en forme de cloche cylindrique solidarisée à la jante,
- un dispositif à roulement comprenant une cage interne mobile en rotation, et une cage externe fixe assujettie à l'écran, lequel reste immobilisé en rotation lorsque la roue tourne,
- et un moyen d'assemblage destiné à former une liaison mécanique démontable reliant en position active la cage interne à l'organe de support rotatif.

### Etat de la technique

Les documents US-A-5588715 et JP 60222301 concernent des enjoliveurs du genre mentionné.

Le document FR-A-2661869 décrit un enjoliveur pour roue de véhicule muni de moyens de répartition asymétrique de la masse de l'écran par rapport à son axe de rotation, de manière à conserver une position angulaire fixe lors de la rotation de la roue.

Le document FR-A-2732648 se rapporte à un enjoliveur publicitaire équipé d'un support auto-centreur muni de bras de fixation et d'une masselotte constituant un ensemble encliqueté sur un disque.

### Objet de l'invention

L'objet de l'invention consiste à réaliser un dispositif enjoliveur à écran publicitaire adaptable à tout type de jantes de véhicules, avec un temps de montage rapide et autorisant un centrage parfait sur la roue.

Le dispositif selon l'invention est caractérisé en ce qu'il comporte :
- l'organe de support rotatif est fixé à la jante par des moyens de centrage coopérant avec les vis de fixation de la jante sur le moyeu d'entraînement de la roue,
- le dispositif à roulement est pourvu d'une rainure de guidage dans laquelle s'engage en position active un élément d'accouplement de l'organe de support rotatif,
- la cage interne est équipée d'une protubérance apte à délimiter axialement ladite rainure de guidage, et une surface d'appui pour le moyen d'assemblage de la liaison mécanique.

Selon une caractéristique de l'invention, l'écran du dispositif enjoliveur comprend un orifice central d'accès au moyen d'assemblage, ledit orifice étant en alignement axial avec un alésage taraudé de l'organe de support rotatif.

Selon un mode de réalisation préférentiel, l'organe de support rotatif comporte une embase cylindrique équipée de l'élément d'accouplement, et une surface latérale tubulaire entourant coaxialement la jante en étant pourvue d'un rebord de positionnement annulaire constituant lesdits moyens de centrage. Le rebord de positionnement est doté d'une rampe d'accrochage biseautée prenant appui sur une rondelle placée sous la tête des vis de fixation. Un jeu axial prédéterminé est ménagé entre la paroi interne de l'écran et l'extrémité de la cage interne pour autoriser le mouvement de rotation de l'organe de support rotatif, et le blocage en rotation de l'écran.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue éclatée en coupe du dispositif enjoliveur selon l'invention ;
- la figure 2 montre une vue identique de la figure 1 en position montée du dispositif enjoliveur sur la jante de la roue ;
- la figure 3 est une vue en élévation de la cloche de l'organe de support rotatif ;
- la figure 4 représente une vue en plan de la figure 3.

### Description d'un mode de réalisation préférentiel

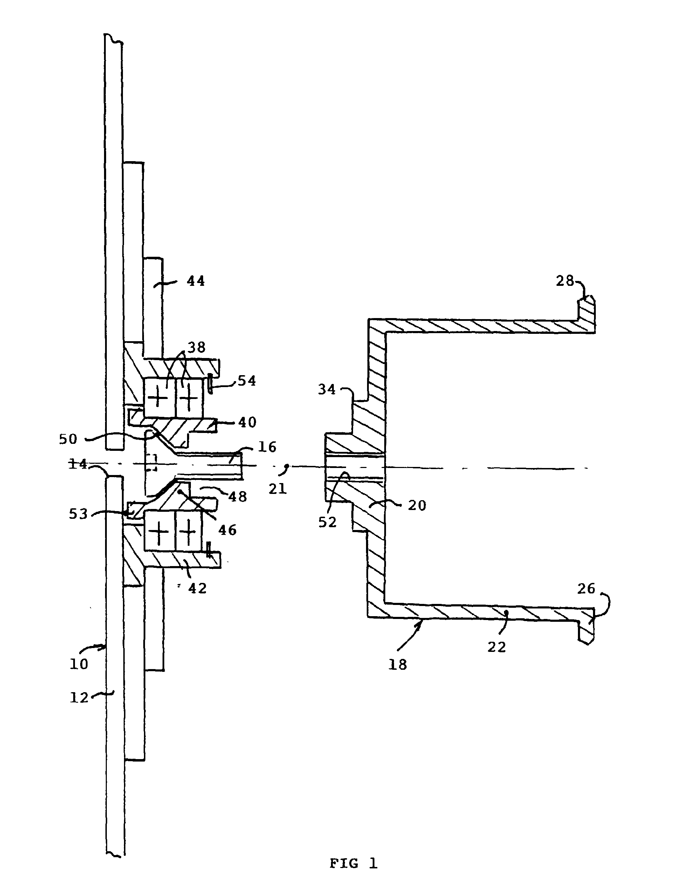

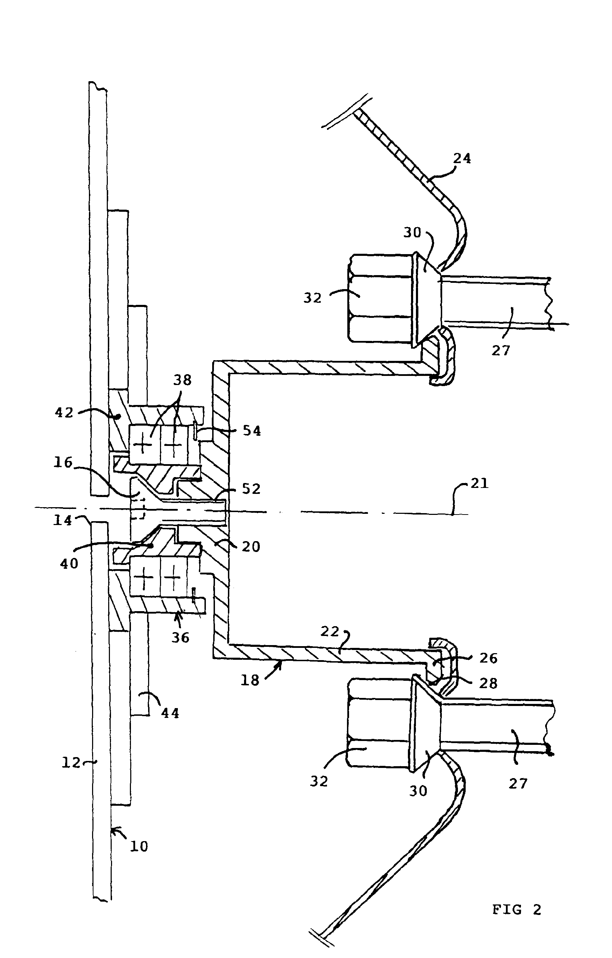

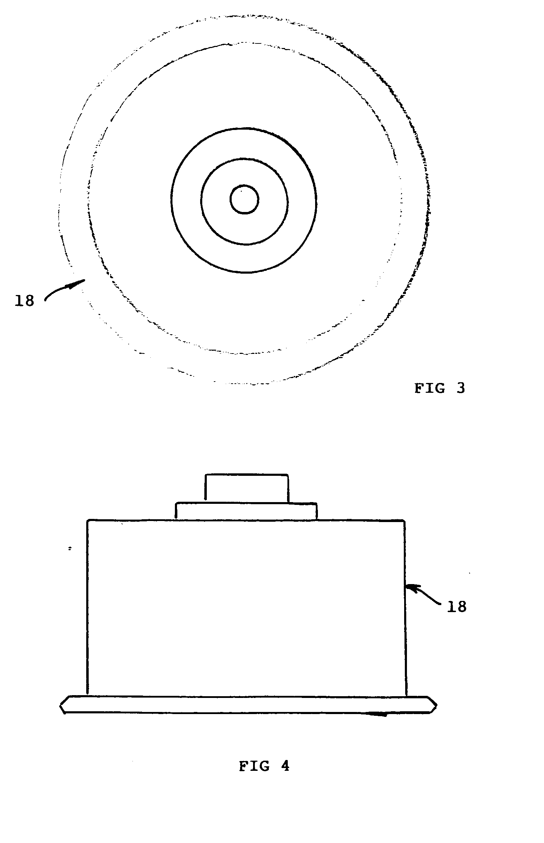

En référence aux figures 1 à 4, un enjoliveur 10 publicitaire est formé par un écran 12 cylindrique, ayant un orifice 14 central d'accès à un moyen d'assemblage 16 pour fixer l'écran 12 de manière démontable à un organe de support 18 rotatif.

L'organe de support 18 rotatif est conformé selon une cloche de fixation dotée d'une embase 20 cylindrique s'étendant perpendiculairement par rapport à la direction axiale 21 du moyeu de la roue, et d'une surface latérale 22 tubulaire montée coaxialement sur la jante 24. A l'opposé de l'embase 20, est agencé un rebord de positionnement 26 annulaire orienté vers l'extérieur, et destiné à être assemblé à la jante 24 par les vis de fixation 27 de la roue. Le rebord de positionnement 26 est équipé préférentiellement d'une rampe 28 d'accrochage biseautée prenant appui sur les rondelles 30 tronconiques placées sous les têtes 32 de vis 27, de manière à constituer des moyens de centrage de l'enjoliveur 10 sur la jante 24.

L'embase 20 de l'organe de support 18 rotatif est pourvue d'un élément d'accouplement 34 formé par un épaulement faisant saillie du côté de l'enjoliveur 10, et destiné à être relié mécaniquement à un dispositif à roulement 36, lequel est apte à immobiliser l'enjoliveur en rotation lorsque la roue tourne autour de l'axe 21 du moyeu. Le dispositif à roulement 36 comporte au moins un roulement à billes 38 logé entre une cage interne 40 mobile en rotation, et une cage externe 42 fixée à l'écran 12 de l'enjoliveur 10 par un organe de serrage 44.

La cage interne 40 cylindrique comprend une protubérance 46 orientée radialement à l'opposé du roulement à billes 38, de manière à délimiter une rainure de guidage 48 axial dans laquelle s'engage l'élément d'accouplement 34 de l'embase 20 de l'organe de support 18 rotatif, et une surface d'appui 50 tronconique pour le moyen d'assemblage 16.

L'embase 20 est dotée d'un alésage 52 axial taraudé destiné à recevoir la tige filetée du moyen d'assemblage 16 formé à titre d'exemple par une vis à tête tronconique coopérant avec la surface d'appui 50 pour constituer une liaison mécanique démontable reliant en position active la cage interne 40 du dispositif à roulement 36 à l'organe de support 18 rotatif. La cage interne 40 tourne avec ce dernier grâce à un jeu axial 53 prédéterminé ménagé entre la paroi interne de l'enjoliveur 10 et l'extrémité de la cage interne 40.

Un circlips 54 est monté dans la partie terminale de la cage externe 42 pour caler les roulements à billes 38 au fond du dispositif à roulement 36. La cloche de l'organe de support 18 rotatif est réalisée de préférence en aluminium, et l'enjoliveur 10 est en matière plastique. Les roulements à billes 38 peuvent bien entendu être remplacés par des organes équivalents.

Le montage du dispositif enjoliveur 10 sur la jante 24 s'effectue de la manière suivante :

Sur la demi-vue de gauche de la figure 1, le dispositif de roulement 36 est fixé sur la paroi interne de l'écran 12 au moyen de l'organe de serrage 44, et la vis d'assemblage 16 est montée imperdable à l'intérieur de la cage interne 40 grâce à la présence de la protubérance 48. La cage externe 42 est solidarisée à l'écran 12, tandis que la cage interne 40 peut tourner librement par rapport à la cage externe 42.

Le sous-ensemble constitué par l'écran 12 et le dispositif de roulement 36 peut ensuite être adapté à la jante 24 de la roue par l'intermédiaire de la cloche de l'organe de support 18. Cette dernière est prémontée sur la jante 24 par l'action de vissage des vis 27 provoquant un effet de blocage de la rampe d'accrochage 28 du rebord de positionnement 26. La cloche peut ainsi tourner en rotation avec la jante 24.

L'engagement le long de la direction axiale de la cage interne 40 sur l'épaulement de l'élément d'accouplement 34 de la cloche permet d'obtenir le centrage automatique du dispositif enjoliveur 10 sur la jante 24. Il suffit ensuite à partir de la face avant de l'écran 12, de visser le moyen d'assemblage 16 dans l'alésage 52 de l'embase 20 à travers l'orifice 14. La liaison mécanique établie en position active de serrage, relie la cage interne 40 du dispositif de roulement 36 à la cloche rotative de l'organe de support 18.

La rotation de la roue lors du déplacement du véhicule provoque l'entraînement simultané en rotation de la cloche de l'organe de support 18 et de la cage interne 40, mais n'a aucune influence sur l'écran 12 du dispositif enjoliveur 10, lequel reste immobilisé en rotation.

Le diamètre de la cloche de l'organe de support 18 rotatif est bien entendu adapté au type de jante des roues du véhicule.

## Revendications

1. Dispositif enjoliveur comprenant un écran (12) publicitaire adaptable à une jante (24) d'une roue de véhicule par des moyens de fixation démontables, et comportant :
- un organe de support (18) rotatif en forme de cloche cylindrique solidarisée à la jante (24),
- un dispositif à roulement (36) comprenant une cage interne (40) mobile en rotation, et une cage externe (42) fixe assujettie à l'écran (12), lequel reste immobilisé en rotation lorsque la roue tourne,
- et un moyen d'assemblage destiné à former une liaison mécanique démontable reliant en position active la cage interne (40) à l'organe de support (18) rotatif,
caractérisé en ce que :
- l'organe de support (18) rotatif est fixé à la jante (24) par des moyens de centrage coopérant avec les vis (27) de fixation de la jante (24) sur le moyeu d'entraînement de la roue,
- le dispositif à roulement (36) est pourvu d'une rainure de guidage (48) dans laquelle s'engage en position active un élément d'accouplement (34) de l'organe de support (18) rotatif,
- la cage interne (40) est équipée d'une protubérance (46) apte à délimiter axialement ladite rainure de guidage (48), et une surface d'appui (50) pour le moyen d'assemblage (16) de la liaison mécanique.

2. Dispositif enjoliveur selon la revendication 1, caractérisé en ce que l'organe de support (18) rotatif comporte une embase (20) cylindrique équipée de l'élément d'accouplement (34), et une surface latérale (22) tubulaire entourant coaxialement la jante (24) en étant pourvue d'un rebord de positionnement (26) annulaire constituant lesdits moyens de centrage.

3. Dispositif enjoliveur selon la revendication 2, caractérisé en ce que le rebord de positionnement (26) est doté d'une rampe (28) d'accrochage biseautée prenant appui sur des rondelles (30) placées sous les têtes (32) des vis de fixation (27).

4. Dispositif enjoliveur selon la revendication 1, caractérisé en ce qu' un jeu axial (53) prédéterminé est ménagé entre la paroi interne de l'écran (12) et l'extrémité de la cage interne (40) pour autoriser le mouvement de rotation de l'organe de support (18) rotatif, et le blocage en rotation de l'écran (12).

5. Dispositif enjoliveur selon la revendication 1, caractérisé en ce que l'écran (12) du dispositif enjoliveur (10) comprend un orifice (14) central d'accès au moyen d'assemblage (16), ledit orifice étant en alignement axial avec un alésage (52) taraudé de l'organe de support (18) rotatif.

6. Dispositif enjoliveur selon l'une des revendications 1 à 5, caractérisé en ce que la cage externe (42) du dispositif à roulement (36) est fixée à la paroi interne de l'écran (12) par un organe de serrage (44) et de centrage axial.

7. Dispositif enjoliveur selon la revendication 5, caractérisé en ce que le moyen d'assemblage (16) est constitué par une vis à tête tronconique coopérant avec la surface d'appui (50) de forme conjuguée, ladite tête étant associée à une tige filetée introduite en position active dans l'alésage (52) de l'organe de support (18) rotatif pour constituer ladite liaison mécanique.
